(19) Europäisches Patentamt
European Patent Office
Office européen des brevets

(11) Veröffentlichungsnummer: **0 647 663 B1**

(12) **EUROPÄISCHE PATENTSCHRIFT**

(45) Veröffentlichungstag der Patentschrift: **20.12.95**

(21) Anmeldenummer: **94115750.5**

(22) Anmeldetag: **06.10.94**

(51) Int. Cl.6: **C08F 265/04**, C08F 255/02, C08L 51/00, C08F 263/04, C08F 291/02, //(C08F265/04, 214:06)

(54) **Thermoplastische Elastomere auf der Basis von Vinylchlorid-Pfropfcopolymerisaten**

(30) Priorität: **12.10.93 DE 4334727**

(43) Veröffentlichungstag der Anmeldung:
**12.04.95 Patentblatt 95/15**

(45) Bekanntmachung des Hinweises auf die Patenterteilung:
**20.12.95 Patentblatt 95/51**

(84) Benannte Vertragsstaaten:
**DE FR GB IT**

(56) Entgegenhaltungen:
**EP-A- 0 464 584**
**WO-A-92/05210**
**DE-A- 3 803 036**
**US-A- 4 939 212**

(73) Patentinhaber: **Vinnolit Kunststoff GmbH**
**Carl-Zeiss-Ring 25**
**D-85737 Ismaning (DE)**

(72) Erfinder: **Christ, Josef, Dr.**
**Marktler Strasse 88**
**D-84489 Burghausen (DE)**
Erfinder: **Büppelmann, Klaus, Dr.**
**Buchenstrasse 14**
**D-84547 Emmerting (DE)**
Erfinder: **Weber, Karl**
**Peter-Doerfler-Strasse 15**
**D-84579 Unterneukirchen (DE)**

(74) Vertreter: **Schuderer, Michael**
**Wacker-Chemie GmbH**
**Zentralabteilung Patente**
**Marken und Lizenzen**
**Hanns-Seidel-Platz 4**
**D-81737 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 647 663 B1

**Beschreibung**

Die Erfindung betrifft Thermoplastische Elastomere auf der Basis von Vinylchlorid-Pfropfcopolymerisaten, Verfahren zur Herstellung der Thermoplastischen Elastomere sowie deren Verwendung.

Thermoplastische Elastomere zeichnen sich dadurch aus, daß sie sich wie Thermoplasten bei hohen Temperaturen oberhalb der Erweichungstemperatur verarbeiten lassen und wie Elastomere über einen weiten Temperaturbereich gummiähnliche, elastische Eigenschaften aufweisen. Die Vorteile der thermoplastischen Elastomeren bestehen zum einen in der im Vergleich zur Kautschuktechnologie kostengünstigeren Verarbeitungstechnologie und auch in der problemloseren Wiederverwertbarkeit von gebrauchten TPE-Produkten bzw. von Produktionsabfällen aus der Herstellung von TPE-Produkten.

Eine Gruppe der bisher bekannten Thermoplastischen Elastomeren umfaßt Vinylchlorid-(Pfropf)-Copolymerisate enthaltende TPE's. Herkömmliche Vinylchlorid-Pfropfcopolymerisate wie das in der DE-A 3803036 (US-A 5185406) beschriebene, welches als Kautschukphase vernetztes Polybutylacrylat enthält, werden als Schlagzäh-Modifier für Hart-PVC eingesetzt, sind aber für den Einsatz als TPE ungeeignet. Die Gründe hierfür sind die oft schlechte Festigkeit, die zu hohe Härte und vor allem die schlechten elastischen Eigenschaften (Compression Set).

Aus der EP-A 358179 sind Thermoplastische Elastomere bekannt, welche durch Abmischen von Vinylchlorid-Pfropfcopolymerisaten auf der Basis einer ethylenhaltigen Pfropfgrundlage mit Elastomeren wie Acrylnitril-Butadien-Copolymeren, Polybutadien, Polyestern, Polyacrylaten, Paraffinwachsen oder chlorierten bzw. oxidierten Polyolefinen erhalten werden. Die EP-A 358180 (US-A 5153269) beschreibt Thermoplastische Elastomere bestehend aus einer Mischung von Vinylchlorid-Acrylat-Copolymeren und vernetztem Acrylat- bzw. Nitrilkautschuk-Elastomer. Die Elastomerkomponente wird dabei vor, während oder nach der Abmischung mit dem Vinylchloridcopolymerisat vernetzt. Nachteilig bei diesen Blends ist, daß deren Herstellung einen zusätzlichen Verfahrensschritt auf speziellen Compoundiermaschinen bedeutet, der meist recht umständlich und schwierig durchzuführen ist. Ohne diesen Verarbeitungsschritt hat das Blend nicht die gewünschten Eigenschaften und kann in dieser Form vom Anwender auch nicht verarbeitet werden.

Aus der EP-A 464584 (US-A 5175216) sind Thermoplastische Elastomere auf der Basis von Pfropfcopolymerisaten bekannt, worin Vinylchlorid auf eine hoch vernetzte Acrylatpfropfgrundlage aufgepfropft wird und wobei bei einem VC-Gehalt ≥ 35 % die Pfropfgrundlage noch ungesättigte Carbonsäure-Einheiten enthält. Dieses Pfropfcopolymerisat weist zwar auch ohne Beimischung von Elastomeren gute elastische Eigenschaften auf, jedoch erst bei einem VC-Gehalt im Pfropfcopolymerisat von deutlich unter 40 %. Produkte mit so niederem VC-Gehalt sind jedoch nicht mehr mit der üblichen Technologie als Pulver zu handhaben. Sie weisen eine schlechte Rieselfähigkeit auf und verblocken bei der Lagerung. Die Copolymerisation von ungesättigten Carbonsäuren in der Pfropfgrundlage verbessert zwar die elastischen Eigenschaften, führt aber zu Problemen bei der Verarbeitung (Kleben an den heißen Metalloberflächen der Werkzeuge, Erhöhung der Schmelzviskosität) und zu gravierenden Verfärbungen der Fertigartikel. Nachteilig ist weiter, daß für Pfropfcopolymerisate mit einem VC-Gehalt ≥ 35%, ohne die Copolymerisation von ungesättigter Carbonsäure in der Pfropfgrundlage keine TPE's mit befriedigenden elastischen Eigenschaften erhalten werden. Es resultieren demnach zwangsläufig Produkte mit den obengenannten Nachteilen bezüglich Verarbeitung und Färbung der Fertigartikel.

Der Erfindung lag daher die Aufgabe zugrunde, Thermoplastische Elastomere auf der Basis von Vinylchlorid-Pfropfcopolymerisaten zur Verfügung zu stellen, welche ohne Beimischung von Elastomeren das Anforderungsprofil für Thermoplastische Elastomere erfüllen (gute Ölbeständigkeit, elastisches Verhalten über einen weiten Temperaturbereich, Witterungsstabilität und Kälteflexibilität), welche auch bei niederem VC-Gehalt gute Rieselfähigkeit, Lagerfähigkeit und Verarbeitbarkeit zeigen und deren Verwendung nicht zur Verfärbung der damit hergestellten Fertigartikel führt.

Gegenstand der Erfindung sind Thermoplastische Elastomere auf der Basis von Vinylchlorid-Pfropfcopolymerisaten enthaltend

A) 35 bis 60 Gew%, bezogen auf das Gesamtgewicht des Vinylchlorid-Pfropfcopolymerisats, einer aufgepropften, vernetzten Copolymerphase herstellbar durch Copolymerisation von
80 bis 99.95 Gew% Vinylchlorid,
0.05 bis 3.0 Gew% mehrfach ethylenisch ungesättigten Comonomeren sowie
0 bis 19.95 Gew% weiteren copolymerisierbaren, ethylenisch ungesättigten Comonomeren,
oder
mehr als 40 bis 60 Gew%, bezogen auf das Gesamtgewicht des Vinylchlorid-Pfropfcopolymerisats, einer aufgepropften (Co)polymerphase, herstellbar durch (Co)polymerisation von
80 bis 100 Gew% Vinylchlorid sowie
0 bis 20 Gew% weiteren copolymerisierbaren, ethylenisch ungesättigten Comonomeren, bei einer

2

EP 0 647 663 B1

Polymerisationstemperatur von 0 bis 45°C,
und

B) 40 bis 65 Gew%, bezogen auf das Gesamtgewicht des Vinylchlorid-Propfcopolymerisats, einer vernetzten Pfropfgrundlage enthaltend

ein vernetztes Acrylsäureester-Copolymerisat mit 0.01 bis 5 Gew% mehrfach ethylenisch ungesättigten Comonomer-Einheiten sowie gegebenenfalls weiteren mit Acrylsäureestern copolymerisierbaren Comonomeren.

Vorzugsweise enthält das Vinylchlorid-Pfropfcopolymerisat 40 bis 55 Gew% der aufgepfropften, vernetzten Copolymerphase A) oder der aufgepfropften, unvernetzten (Co)polymerphase A) und 45 bis 60 Gew% der vernetzten Pfropfgrundlage B).

Zur Vernetzung der aufgepropften Vinylchlorid-Copolymerphase A) geeignete, mehrfach ethylenisch ungesättigte Comonomere sind solche, welche keine konjugierten Doppelbindungen aufweisen, beispielsweise Divinylester von Dicarbonsäuren wie Divinyladipat; Diallylester von Polycarbonsäuren wie Diallylphthalat, Diallylfumarat; Divinylether von mehrwertigen Alkoholen wie Ethylenglykoldivinylether; Divinylaromaten wie Divinylbenzol; Allyl- und Methallylester von ethylenisch ungesättigten Monocarbonsäuren wie Allylmethacrylat; Di- und Triacrylate von mehrwertigen Alkoholen wie Ethylenglykoldimethacrylat, Propylenglykoldimethacrylat, Diethylenglykoldiacrylat (DEGDA), Diethylenglykoldimethacrylat (DEGDMA), Trimethylenglykoldiacrylat, Butylenglykoldiacrylat, Pentamethylenglykoldiacrylat, Glyceryltriacrylat, Trimethylolpropantriacrylat (TMPTA), Trimethyolpropantrimethacrylat (TMPTMA); Tetraacrylate mehrwertiger Alkohole wie Pentaerythrittetraacrylat; Triallylcyanurat.

Bevorzugt werden Diallylphthalat, Divinyladipat, Triallylcyanurat, Allylmethacrylat, Ethylenglykoldimethacrylat, Butylenglykoldiacrylat, Trimethylenglykoldiacrylat und Trimethyolpropantriacrylat oder deren Gemische. Vorzugsweise beträgt die Menge an copolymerisiertem Vernetzer 0.1 bis 1.5 Gew%, bezogen auf das Gesamtgewicht der aufgepropften Copolymerphase A).

Neben Vinylchlorid und gegebenenfalls mehrfach ethylenisch ungesättigten Comonomeren kann die aufgepfropfte Copolymerphase A) noch ein oder mehrere weitere copolymerisierte, ethylenisch ungesättigte Comonomere enthalten. Beispiele hierfür sind Vinylester von gesättigten Carbonsäuren mit 2 bis 12 C-Atomen wie Vinylacetat, Vinylpropionat, Vinyllaurat oder Versaticsäurevinylester; (Meth)acrylsäureester von Alkoholen mit 1 bis 8 C-Atomen, wie Methylacrylat, Methylmethacrylat, n-Butylacrylat, n-Butylmethacrylat, t-Butylacrylat, 2-Ethylhexylacrylat; ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; Olefine wie Ethylen.

Der Gehalt an solchen Comonomeren sollte für den Fall, daß Monomere copolymerisiert werden, deren Homopolymerisate eine Glasübergangstemperatur $T_g < 20°C$ besitzen, nicht mehr als 5 Gew% betragen, bezogen auf das Gesamtgewicht der Copolymerphase A). Für den Fall, daß Monomere copolymerisiert werden, deren Homopolymerisate eine Glasübergangstemperatur $T_g \geqq 20°C$ besitzen, kann deren Anteil bis 20 Gew% betragen, bezogen auf das Gesamtgewicht der Copolymerphase A).

Enthält die aufgepfropfte Copolymerphase A) keine vernetzend wirkenden Comonomereinheiten, so ist es erfindungswesentlich, daß die Pfropfung bei einer Polymerisationstemperatur erfolgt, die bei der Homopolymerisation von Vinylchlorid zu VC-Polymerisaten mit einem K-Wert $\geqq$ 78 (DIN 53726) führt; dies entspricht einer Polymerisationstemperatur von 0 bis 45°C.

Als Pfropfgrundlage enthält das erfindungsgemäße Thermoplastische Elastomer ein vernetztes Acrylsäureester-Copolymerisat mit 0.01 bis 5 Gew% mehrfach ethylenisch ungesättigten Comonomer-Einheiten sowie gegebenenfalls weiteren copolymerisierbaren Comonomeren oder Gemische solcher Copolymerisate.

Geeignete Acrylsäureester-Copolymerisate sind solche aus einem oder mehreren Acrylsäureestern von Alkoholen mit 1 bis 12 C-Atomen, beispielsweise Methylacrylat, Ethylacrylat, Propylacrylat, n-Butylacrylat, 2-Ethylhexylacrylat.

Geeignete, mehrfach ethylenisch ungesättigte Comonomere sind die bereits weiter oben genannten. Vorzugsweise enthält die vernetzte Acrylat-Pfropfgrundlage 0.05 bis 0.5 Gew%, bezogen auf das Gesamtgewicht der Pfropfgrundlage, copolymerisiertes Diallylphthalat, Divinyladipat, Triallylcyanurat, Allylmethacrylat, Ethylenglykoldimethacrylat, Butylenglykoldiacrylat, Trimethylenglykoldiacrylat, Trimethyolpropantriacrylat oder deren Gemische.

Beispiele für weitere copolymerisierbare, ethylenisch ungesättigte Comonomere sind Vinylester von gesättigten Carbonsäuren mit 2 bis 12 C-Atomen wie Vinylacetat, Vinylpropionat, Vinyllaurat oder Versaticsäurevinylester; Methacrylsäureester von Alkoholen mit 1 bis 8 C-Atomen, wie Methylmethacrylat, n-Butylmethacrylat; ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; Olefine wie Ethylen; Sulfonate wie Vinylsulfonat, 2-Acrylamido-2-

3

methylpropansulfonat.

Bevorzugt sind vernetzte Acrylsäureester-Copolymerisate aus n-Butylacrylat und/oder 2-Ethylhexylacrylat. Als Pfropfgrundlage B) bevorzugt sind auch vernetzte AcrylsäuresterEthylen-Vinylester-Copolymerisatemit einem Acrylsäureester-Gehalt von 35 bis 70 Gew%, einem Ethylen-Gehalt von 10 bis 30 Gew% und Vinylester-Gehalt von 20 bis 50 Gew%, bezogen auf das Gesamtgewicht des Copolymerisats B), insbesonders vernetzte Copolymerisate enthaltend n-Butylacrylat-, Ethylen- und Vinylacetat-Einheiten. Gegebenenfalls können auch Gemische der genannten Acrylsäureester-Copolymerisate enthalten sein.

Besonders bevorzugte Thermoplastische Elastomere sind Vinylchlorid-Pfropfcopolymerisate enthaltend

A) 40 bis 55 Gew%, bezogen auf das Gesamtgewicht des Pfropfcopolymerisats, einer aufgepfropften, vernetzten Copolymerphase aus

98.5 bis 99.9 Gew% Vinylchlorid sowie

0.1 bis 1.5 Gew% eines oder mehrerer mehrfach ethylenisch ungesättigter Comonomere aus der Gruppe Diallylphthalat, Allylmethacrylat, Ethylenglykoldimethacrylat, Butylenglykoldiacrvlat, Trimethylenglykoldiacrylat, Trimethyolpropantriacrylat,

oder

mehr als 40 bis 55 Gew%, bezogen auf das Gesamtgewicht des Vinylchlorid-Pfropfcopolymerisats, einer aufgepropften VC-Polymerphase, herstellbar durch Pfropfpolymerisation von Vinylchlorid bei einer Polymerisationstemperatur von 0 bis 45°C,

und

B) 45 bis 60 Gew%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew% oder Gemischen der genannten Copolymerisate, wobei die Copolymerisate mit 0.05 bis 0.5 Gew% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind.

Ein weiterer Gegenstand der Erfindung ist ein Verfahren zur Herstellung der erfindungsgemäßen Thermoplastischen Elastomeren bei dem in einer 1. Stufe durch radikalische Polymerisation nach dem Emulsionspolymerisationsverfahren in wäßrigem Medium

a) ein oder mehrere Acrylsäureester von Alkoholen mit 1 bis 12 C-Atomen oder

b) ein oder mehrere Acrylsäureester von Alkoholen mit 1 bis 12 C-Atomen und ein oder mehrere Vinylester von Carbonsäuren mit 2 bis 12 C-Atomen unter Aufdrücken von Ethylen

copolymerisiert werden,

wobei die Copolymerisation in Gegenwart von 0.05 bis 5 Gew%, bezogen auf die gesamte Monomerphase, mehrfach ethylenisch ungesättigten Comonomeren, gegebenenfalls in Gegenwart von weiteren copolymerisierbaren, ethylenisch ungesättigten Comonomeren, durchgeführt wird,

und in einer 2.Stufe ein Monomergemisch enthaltend 80 bis 99.95 Gew% Vinylchlorid, 0.05 bis 3.0 Gew% mehrfach ethylenisch ungesättigte Comonomere und 0 bis 19.95 Gew% weitere copolymerisierbare, ethylenisch ungesättigte Comonomere,

oder in dieser 2. Stufe, bei einer Polymerisationstemperatur von 0 bis 45°C, 80 bis 100 Gew% Vinylchlorid und 0 bis 20 Gew% weitere copolymerisierbare, ethylenisch ungesättigte Comonomere,

in Gegenwart der nach der ersten Verfahrensstufe erhaltenen Emulsionen oder Gemische dieser Emulsionen durch radikalische Polymerisation nach dem Suspensions- oder Emulsionspolymerisationsverfahren in wäßrigem Medium copolymerisiert werden,

und nach Aufarbeitung zum trockenen Pfropfcopolymerisat dieses gegebenenfalls mit den für Thermoplastische Elastomere üblichen Additiven compoundiert wird.

Die radikalische Emulsionspolymerisation in der ersten Stufe kann in den für die Polymerisation üblichen Rührreaktoren, bei der Copolymerisation mit Ethylen in den üblichen Druckreaktoren bei einem Ethylendruck von 40 bis 90 bar abs., durchgeführt werden. Die Polymerisationstemperatur beträgt üblicherweise 30 bis 90°C.

Zur Einleitung der Emulsionspolymerisation werden die gebräuchlichen wasserlöslichen Radikalbildner in einer Menge von vorzugsweise 0.01 bis 3.0 Gew%, bezogen auf die Monomerphase, eingesetzt. Beispiele für Radikalbildner sind Ammonium- und Kaliumpersulfat; Ammonium-und Kaliumperoxodisulfat; Wasserstoffperoxid; Alkylhydroperoxide wie t-Butylhydroperoxid; Kalium-, Natrium- und Ammoniumperoxodiphosphat; Azoverbindungen wie Azobisisobutyronitril oder Azobiscyanovaleriansäure. Die Initiierung kann entweder direkt durch Temperaturerhöhung oder bei niederen Temperaturen durch Einsatz von Reduktionsmitteln erfolgen. Geeignete Reduktionsmittel sind beispielsweise Natriumformaldehydsulfoxylat, Natriumsulfit, Natriumhydrogensulfit, Dithionit oder Ascorbinsäure, welche in einer Menge von vorzugsweise 0.01 bis

EP 0 647 663 B1

0.5 Gew%, bezogen auf die Monomerphase, eingesetzt werden können.

Als Dispergiermittel können die bei der Emulsionspolymerisation gebräuchlichen ionischen und nichtionischen Emulgatoren eingesetzt werden. Vorzugsweise werden 0.1 bis 10.0 Gew% Emulgator, bezogen auf die Monomerphase, eingesetzt. Geeignete Emulgatoren sind beispielsweise anionische Tenside wie Alkylsulfate mit einer Kettenlänge von 8 bis 18 C-Atomen, Alkyl- und Alkylarylethersulfate mit 8 bis 18 C-Atomen, Alkyl- und Alkylarylethersulfate mit 8 bis 18 C-Atomen im hydrophoben Rest und bis zu 40 Ethylen- oder Propylenoxid-Einheiten, Alkyl- oder Alkylarylsulfonate mit 8 bis 18 C-Atomen, Ölsäuresulfonate, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können zur Polymerisation noch Puffersubstanzen wie Natriumcarbonat, Natriumhydrogenphosphat oder Alkaliacetate eingesetzt werden.

Die Polymerisation kann kontinuierlich oder diskontinuierlich, mit oder ohne Verwendung von Saatlatices, unter Vorlage aller oder einzelner Bestandteile des Reaktionsgemisches oder unter teilweiser Vorlage und Nachdosierung der oder einzelner Bestandteile des Reaktionsgemisches oder nach einem Dosierverfahren ohne Vorlage durchgeführt werden. In einer bevorzugten Ausführungsform wird ein Teil der Monomerphase zusammen mit einer Teilmenge des Initiators in Emulsion vorgelegt und der restliche Initiator sowie eine Emulsion mit der Restmenge der Monomeren zudosiert. Die mehrfach ethylenisch ungesättigten Comonomere können auch getrennt von der zu dosierenden Monomerphase, ganz oder teilweise, in Emulsion erst nach Initiierung der Polymerisation zudosiert werden. Bei der Copolymerisation mit Ethylen wird der Ethylendruck zu Beginn der Polymerisation eingestellt und vorzugsweise konstant gehalten. Bei der Copolymerisation der Acrylsäureester-Ethylen-Vinylester-Latices wird vorzugsweise so vorgegangen, daß erst nach Abschluß der Dosierung der Vinylester-Monomeren und Druckentspannung des Ansatzes die Acrylsäureester-Monomeren unter Weiterlaufen der Initiatordosierung zudosiert werden.

Zur Pfropfcopolymerisation werden der in der ersten Stufe gefertigte vernetzte Latex oder Gemische dieser Latices eingesetzt, wobei deren Festgehalt vorzugsweise auf 20 bis 50 Gew% eingestellt wird. Die Propfcopolymerisation wird nach dem Suspensions- oder Emulsionspolymerisationsverfahren in für die VC-Polymerisation üblichen Reaktoren durchgeführt.

Die Polymerisationstemperatur beträgt bei der Copolymerisation mit vernetzenden, mehrfach ethylenisch ungesättigten Comonomeren 30 bis 85°C; vorzugsweise wird bei niederem Temperaturniveau von 30 bis 60°C polymerisiert. Wird die Pfropfung ohne Zusatz von vernetzenden Comonomeren durchgeführt, beträgt die Polymerisationstemperatur 0 bis 45°C, so daß Reaktionsbedingungen vorliegen, die bei der Homopolymerisation von Vinylchlorid Homo-PVC einen K-Wert nach DIN 53726 von $\geq$ 78 ergeben.

Zur Initiierung der Suspensionspolymerisation werden die dazu gebräuchlichen monomerlöslichen Radikalbildner aus der Gruppe der Peroxide oder Azoinitiatoren, in einer Menge von vorzugsweise 0.01 bis 3.0 Gew%, bezogen auf Pfropfmonomer, eingesetzt. Einige Beispiele für geeignete monomerlösliche Initiatoren sind: Diacylperoxide wie Diacetyl- oder Dilauroylperoxid; Dialkylperoxide wie Di-t-butyl-peroxid; Perester wie t-Butylperoxyneodecanoat; Peroxodicarbonate wie Di-t-butylcyclohexyl- oder Dimyristylperoxodicarbonat; Azobisisobutyronitril oder Azobisdimethylvaleronitril. Zur Einleitung der Emulsionspolymerisation werden die gebräuchlichen wasserlöslichen Radikalbildner in einer Menge von vorzugsweise 0.01 bis 3.0 Gew%, bezogen auf die Pfropfmonomerphase, eingesetzt. Beispiele für wasserlösliche Radikalbildner sind Ammonium- und Kaliumpersulfat; Ammonium- und Kaliumperoxodisulfat; Wasserstoffperoxid; Alkylhydroperoxide wie t-Butylhydroperoxid; Kalium-, Natrium- und Ammoniumperoxodiphosphat; Azoverbindungen wie Azobisisobutyronitril oder Azobiscyanovaleriansäure.

Die Initiierung kann entweder direkt durch Temperaturerhöhung oder bei niederen Temperaturen durch Einsatz von Reduktionsmitteln erfolgen. Geeignete Reduktionsmittel sind beispielsweise Natriumformaldehydsulfoxylat, Natriumsulfit, Natriumhydrogensulfit, Dithionit oder Ascorbinsäure, welche in einer Menge von vorzugsweise 0.01 bis 0.5 Gew%, bezogen auf die Monomerphase, eingesetzt werden können.

Zur Stabilisierung des Polymerisationsansatzes werden bei der Suspensionspolymerisation vorzugsweise 0.05 bis 0.5 Gew%, bezogen auf die Pfropfmonomerphase, Schutzkolloid gegebenenfalls in Kombination mit Emulgatoren eingesetzt. Geeignete Schutzkolloide sind Polyvinylalkohole, teilverseifte Polyvinylacetate, Celluloseether wie Methyl-, Methylhydroxypropyl-, Hydroxyethyl-, Methylhydroxyethyl-Cellulose, Carboxymethylcellulosen, Polyvinylpyrrolidon, Styrolmaleinsäureanhydridcopolymere.

Bei der Pfropfung nach dem Emulsionspolymerisationsverfahren werden zur Stabilisierung die dabei gebräuchlichen ionischen und nichtionischen Emulgatoren eingesetzt. Vorzugsweise werden 0.1 bis 10.0 Gew% Emulgator, bezogen auf die Pfropfmonomerphase, eingesetzt. Geeignete Emulgatoren sind beispielsweise anionische Tenside wie Alkylsulfate mit einer Kettenlänge von 8 bis 18 C-Atomen, Alkyl- und Alkylarylethersulfate mit 8 bis 18 C-Atomen, Alkyl- und Alkylarylethersulfate mit 8 bis 18 C-Atomen im

5

hydrophoben Rest und bis zu 40 Ethylen- oder Propylenoxid-Einheiten, Alkyl- oder Alkylarylsulfonate mit 8 bis 18 C-Atomen, Ölsäuresulfonate, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können zur Polymerisation noch Puffersubstanzen wie Natriumcarbonat, Natriumhydrogenphosphat oder Alkaliacetate eingesetzt werden.

Zur Pfropfcopolymerisation werden der vernetzte Acrylatlatex oder Gemische dieser Latices vorgelegt. Die Pfropfmonomerphase kann vorgelegt oder ganz oder teilweise dosiert werden. Vorzugsweise werden die mehrfach ethylenisch ungesättigten Pfropfmonomere vorgelegt. Die restlichen Pfropfmonomere werden in einem Anteil von 10 bis 40 Gew% vorgelegt und der Rest im Verlauf der Polymerisation zudosiert. Die Polymerisation wird vorzugsweise durch Zudosierung des Radikalbildners gestartet und der Radikalstarter im Verlauf der Polymerisation zudosiert. Bei der Verwendung von Redoxkatalysatorsystemen zur Initiierung der Polymerisation wird die Reduktionskomponente vorzugsweise vorgelegt. Wird die Pfropfung nach dem Suspensionspolymerisationsverfahren durchgeführt, kann gegebenenfalls der Latex in an sich bekannter Weise durch Zugabe eines Fällungsmittels, beispielsweise einer wäßrigen $CaCl_2$-Lösung, koaguliert werden und anschließend gepfropft werden.

Der Polymerisationsansatz wird in üblicher Art und Weise aufgearbeitet. Die Suspension oder Emulsion wird in bekannter Weise beispielsweise durch Evakuieren oder Strippen entgast. Das nach dem Emulsionspolymerisationsverfahren hergestellte Pfropfcopolymerisat wird vorzugsweise durch Sprühtrocknung isoliert. Die Isolierung der Pfropfcopolymerisate kann aber auch durch Koagulation oder Zentrifugation und anschließende Trocknung, beispielsweise in einem Stromtrockner, erfolgen.

Die erfindungsgemäßen Thermoplastischen Elastomere können mit den in der PVC-Technologie üblichen Zusatzstoffen modifiziert werden. Beispiele für Zusatzstoffe sind Wärme- und Lichtstabilisatoren auf Basis von Zn-, Ca-, Cd-, Ba-, Sn- und Pb-Verbindungen; beispielsweise BaZn- und CaZn-Verbindungen. Darüberhinaus können noch Verarbeitungshilfen, wie Gleitmittel (z.B. Paraffine, Fettsäureester), sowie Pigmente wie Titandioxid und Füllstoffe wie Kreide, hochdisperses Siliciumdioxid eingearbeitet werden. Die Zugabemengen entsprechen dabei den in der PVC-Verarbeitung üblichen. Gegebenenfalls können auch geringe Mengen an Weichmacher eingearbeitet werden. Beispiele hierfür sind Phthalsäureester wie Dioctylphthalat oder Diisodecylphthalat. Die Herstellung der Compounds kann in den dazu in der PVC-Technologie üblichen Anlagen erfolgen, beispielsweise in gegebenenfalls beheizbaren Langsam- oder Schnellmischern und Extrudern.

Die erfindungsgemäßen Thermoplastischen Elastomere zeichnen sich im Unterschied zu bisher bekannten Thermoplastischen Elastomeren, deren aufgepfropfte Polymerphasen unvernetzt sind und niedere K-Werte von etwa 50 bis 70 aufweisen, auch bei niederem Gehalt an aufgepfropftem Polymer durch sehr gute Rieselfähigkeit, vor allem auch bei längerer Lagerung, und unproblematische Verarbeitbarkeit aus. Dies ist umso erstaunlicher, als bei der Verarbeitung von herkömmlichen VC-Polymerisaten mit zunehmender Vernetzung oder steigendem K-Wert die Verarbeitbarkeit immer problematischer wird. Bei hohem Gehalt an aufgepfropfter Polymerphase werden, auch ohne die in der EP-A 464584 beschriebene Copolymerisation von ungesättigten Carbonsäuren in der Pfropfgrundlage, hervorragende elastische Eigenschaften erzielt, mit dem zusätzlichen Vorteil, daß keine Verfärbung der Fertigprodukte auftreten kann. Die erfindungsgemäßen Pfropfcopolymerisate zeichnen sich darüber hinaus durch gute Ölbeständigkeit, elastisches Verhalten über einen weiten Temperaturbereich, Witterungsstabilität und Kälteflexibilität aus und sind in allen gängigen PVC-Stabilisierungssystemen gut verarbeitbar und mit herkömmlichem PVC coextrudierbar.

Die Verarbeitung der erfindungsgemäßen Thermoplastischen Elastomere zu Fertigprodukten kann mit den in Weich-PVC-Technologie üblichen Verfahren erfolgen, beispielsweise durch Extrusion, Kalandrierung und Spritzguß. Sie eignen sich unter anderem zur Herstellung von Dichtungen wie Fenster-, Tür- und Automobildichtungen oder zur Herstellung von weichmacherfreien, kälteflexiblen Weichfolien wie Dachbahnen oder anderen Belagstoffen. Sie eignen sich auch zur Verwendung als Schlagzähmodifier.

BEISPIELE:

Beispiel 1:

(Herstellung eines Thermoplastischen Elastomeren mit Polyacrylat-Pfropfgrundlage)

In einem Rührautoklaven wurden 56 kg Wasser, 1.2 kg Mersolat K30 (Na-Alkylsulfonat), 0.4 g Fe-Ammonsulfat und 1.8 l Essigsäure vorgelegt und unter Rühren auf 70 °C aufgeheizt.

Nach Erreichen der Temperatur wurden eine Voremulsion aus 144 kg Wasser, 3.0 kg Mersolat K30, 180 kg Butylacrylat und 320 g Allylmethacrylat und eine Lösung von 90 g Kaliumpersulfat in 16 kg Wasser getrennt zudosiert und bei 70°C polymerisiert. Der so erhaltene vernetzte Polybutylacrylat-Latex wurde auf einen Festgehalt von 41.5 % eingestellt.

Zur Pfropfung wurden 158.7 kg des Latex, 92.8 kg Wasser, 21 g Na-Sulfit, 1.4 kg Kaliumhydrogencarbonat, 0.2 kg Diallylphthalat zusammen mit 20.6 kg Vinylchlorid vorgelegt und der Ansatz auf 53°C erwärmt. Nach Erreichen der Temperatur wurde mit der Dosierung einer 0.5 %-igen wäßrigen Lösung von Kaliumpersulfat begonnen. Es wurden weitere 48.0 kg Vinylchlorid zudosiert und die Polymerisation bei 53°C durchgeführt. Nach Abkühlen wurde der Ansatz entgast und durch Sprühtrocknung aufgearbeitet. Das Endprodukt enthielt 52 Gew% vernetztes Polybutylacrylat und 48 Gew% darauf gepfropftes vernetztes VC-Polymerisat.

Beispiel 2:

(Herstellung eines Thermoplastischen Elastomeren mit Butylacrylat-Ethylen-Vinylacetat-Pfropfgrundlage)

Die Herstellung der Pfropfgrundlage erfolgte analog der in der EP-B 320930 beschriebenen Methode:
In einem Rührautoklaven wurde bei 40°C unter einem Ethylendruck von 65 bar eine Dispersion eines n-Butylacrylat-Ethylen-Vinylacetat-Copolymeren hergestellt. Dabei befand sich 1/10 des Vinylacetats in der Polymerisationsvorlage; der Rest wurde nach Polymerisationsstart zudosiert; danach wurde noch 3 h nachreagiert, wobei der E-Druck noch 1.5 h auf 65 bar gehalten wurde. Nach Abschluß der Nachreaktionszeit wurde entspannt und bei Weiterlaufen der Initiatordosierung n-Butylacrylat zudosiert. Als Emulgator wurden 1.03 Gew%, bezogen auf das Gesamtgewicht der Comonomeren, eines Diisohexylsulfosuccinats (Aerosol MA der Fa. Cyanamid) verwendet, das im Verhältnis 1 : 4 auf Vorlage und Dosierung aufgeteilt war. Als Vernetzerkomponente wurden 0.2 Gew%, bezogen auf das Gesamtgewicht der Comonomeren, Divinyladipat eingesetzt, das im Verhältnis 1 : 50 zwischen Polymerisationsvorlage und Dosierung verteilt war. Die Reaktionssteuerung erfolgte in üblicher Weise durch Zugabe von 0.48 % Kaliumperoxodisulfat und 0.11 % Natriumformaldehydsulfoxylat, jeweils bezogen auf das Gesamtgewicht der Comonomeren, über den Reaktionszeitraum. Die Dispersion wurde mit KOH-Lösung auf pH 5.5 eingestellt. Die resultierende n-Butylacrylat-Ethylen-Vinylacetat-Dispersion hatte einen Feststoffgehalt von 43 % und enthielt im Polymeren 35 % n-Butylacrylat, 28.8 % Ethylen und 36 % Vinylacetat eingebaut. Der so erhaltene Latex wurde auf 41.5 % Festgehalt eingestellt. Die Pfropfung wurde analog Beispiel 1 durchgeführt. Es resultierte ein Endprodukt mit 55 Gew% vernetztem n-Butylacrylat-Ethylen-Vinylacetat und 45 Gew% darauf gepfropftes vernetztes VC-Polymerisat.

Beispiel 3:

(Herstellung eines Thermoplastischen Elastomeren bei niederer Pfropftemperatur)

Es wurde analog Beispiel 1 vorgegangen mit dem Unterschied, daß die Pfropfung ohne Vernetzer bei einer Polymerisationstemperatur von 40°C durchgeführt wurde.

Vergleichsbeispiel 1:

(Herstellung eines Thermoplastischen Elastomeren mit vernetzter Polybutylacrylat-Pfropfgrundlage und unvernetzter VC-Pfropfphase)

Es wurde analog Beispiel 1 vorgegangen mit dem Unterschied, daß die Pfropfung ohne Zugabe von Vernetzer, aber bei der üblichen Temperatur von 53°C durchgeführt wurde. Das Endprodukt enthielt 52 Gew% vernetztes Polybutylacrylat und 48 Gew% darauf gepfropftes unvernetztes VC-Polymerisat.

Vergleichsbeispiel 2:

(Herstellung eines Thermoplastischen Elastomeren mit vernetzter Polybutylacrylat-Pfropfgrundlage und unvernetzter VC-Pfropfphase)

Es wurde analog Vergleichsbeispiel 1 vorgegangen mit dem Unterschied, daß die eingesetzte VC-Menge in der Vorlage 33 kg und in der Dosierung 50 kg betrug. Das Endprodukt enthielt 42 Gew% vernetztes Polybutylacrylat und 58 Gew% darauf gepfropftes unvernetztes VC-Polymerisat.

Vergleichsbeispiel 3:

(Herstellung eines Thermoplastischen Elastomeren gemäß EP-A 464584)

Es wurde analog Beispiel 1 vorgegangen mit dem Unterschied, daß in Anlehnung an das Verfahren aus der EP-A 464584 der Latex durch Copolymerisation in Gegenwart von 3.7 kg Trimethylolpropantriacrylat vernetzt wurde und 1.8 kg Itaconsäure copolymerisiert wurden. Die Pfropfung wurde mit 21 kg Vinylchlorid in der Vorlage und 48 kg Vinylchlorid in der Dosierung ohne Zugabe von Vernetzer durchgeführt. Das Endprodukt enthielt 54 Gew% vernetztes Polybutylacrylat mit 1 Gew% copolymerisierter Itaconsäure und 2 Gew% copolymerisiertem TMPTA und 46 Gew% darauf gepfropftes VC-Polymerisat.

Vergleichsbeispiel 4:

(Herstellung eines Thermoplastischen Elastomeren gemäß EP-A 464584 mit relativ niederem VC-Anteil)

Es wurde analog Vergleichsbeispiel 3 vorgegangen mit dem Unterschied, daß die Pfropfung mit 13 kg Vinylchlorid in der Vorlage und 30 kg Vinylchlorid in der Dosierung durchgeführt wurde. Das Endprodukt enthielt 66 Gew% vernetztes Polybutylacrylat mit 1 Gew% copolymerisierter Itaconsäure und 2 Gew% copolymerisiertem TMPTA und 34 Gew% darauf gepfropftes VC-Polymerisat. Die genaue Zusammensetzung der Thermoplastischen Elastomere ist in Tabelle 1 wiedergegeben.

Anwendungstechnische Prüfung:

Die anwendungstechnische Prüfung erfolgte unter Verwendung der in den Beispielen und Vergleichsbeispielen hergestellten Thermoplastischen Elastomere. Die Rieselfähigkeit der Pulver wurde nach DIN 53492 bestimmt und die Ergebnisse qualitativ mit folgendem Bewertungsschema beurteilt:

"+" = gut rieselfähig",

"0" = leicht verblocktes, brockiges Produkt,

"-" = verblocktes Produkt.

Zur Prüfung der Lagerstabilität (Lagertest) wurden die Thermoplastischen Elastomere unter Belastung von 0.3 kg/cm$^2$ bei einer Temperatur von 40°C 16 Stunden lang gelagert. Nach Ablauf der Lagerzeit wurde, soweit möglich, die Rieselfähigkeit wie eben beschrieben nach DIN 53492 bestimmt und mit dem obigen Bewertungsschema eingestuft.

Zur weiteren Testung wurden mit folgender Verarbeitungsrezeptur Formkörper hergestellt:

100 Teile TPE-Harz aus den jeweiligen Beispielen oder Vergleichsbeispielen,

5 Teile Stabilisator-Compound auf Ca/Zn-Basis

10 Teile Diisodecylphthalat,

1 Teil Epoxidiertes Sojabohnenöl

0.7 Teile Externe Gleitmittel

0.5 Teile Phosphit-Chelator

Die Mischung wurde auf einem Walzwerk 5 Minuten bei 190°C gewalzt. Durch 10-minütiges Pressen wurden Preßplatten als Prüfkörper für die weitere Testung hergestellt. Darüber hinaus wurden die obengenannten Mischungen, soweit diese TPE-Harz aus den Beispielen enthielten, noch extrudiert und spritzgegossen.

Die Beurteilung der Verarbeitung erfolgte qualitativ nach folgenden Kriterien:

"+" = problemlos zu verarbeiten,

"-" = schlechte Verarbeitbarkeit, Kleben an Metalloberflächen der Werkzeuge, hochviskose Schmelze.

Die Farbe der Formkörper sowie deren Oberflächenbeschaffenheit wurde qualitativ beurteilt.

Die Shore-Härte A wurde nach DIN 53505 gemessen.

Reißfestigkeit und Reißdehnung wurden im Zugversuch gemäß DIN 53454 bestimmt.

Die Elastizität (Compression Set) wurde bei 23°C und 100°C gemäß DIN 53517 an getemperten Probekörpern bestimmt.

Zur Beurteilung des "Spontanen Rückstellvermögens" wurde ein Formkörper wie in der Reißfestigkeitsprüfung um 100 % gedehnt und entlastet. Die Beurteilung erfolgte qualitativ mit nachstehendem Bewertungsschema:

Der Formkörper erreicht seine ursprüngliche Form innerhalb einer Zeitspanne von 10 Sekunden

"+ +" =     sehr schnell,

"+" =      schnell,

"0" =      langsam,

"-" =      nicht.

Die Ergebnisse der anwendungstechnischen Prüfung für die in den Beispielen und Vergleichsbeispielen hergestellten TPE's sind in Tabelle 2 zusammengefaßt.

Der Vergleich der Testergebnisse von Beispiel 1 mit Vergleichsbeispiel 1 zeigt, daß bei TPE's mit unvernetztem, aufgepropftem Vinylchlorid-Polymerisat, welche bei im Stand der Technik üblicher Pfropftemperatur hergestellt wurden, sich die Pulvereigenschaften (Rieselfähigkeit, Lagerfähigkeit) stark verschlechtern; die Produkte neigen zum Verblocken. Damit hergestellte Formkörper verfügen bei 100 °C nur mehr über ungenügende elastische Eigenschaften (C-Set 100 °C) und nur langsames Rückstellvermögen.

Erhöht man den Anteil der aufgepropften PVC-Phase wie in Vergleichsbeispiel 2 lassen sich zwar die Pulvereigenschaften verbessern, die elastischen Eigenschaften der Formkörper sind aber dann sowohl bei niederer (C-Set 23 °C) als auch hoher Temperatur unbefriedigend.

Pfropft man dagegen, wie in Beispiel 3, bei einer Temperatur ≤ 45 °C, erhält man TPE's mit denselben hervorragenden Pulvereigenschaften und elastischen Eigenschaften wie bei Vernetzung der aufgepropften Phase.

TPE's mit bei üblicher Temperatur gepfropfter, unvernetzter Pfropfphase und hoch vernetzter Itaconsäure-haltiger Pfropfgrundlage (Vergleichsbeispiele 3 und 4) sind bei niederem Anteil der aufgepfropften PVC-Phase nur schlecht handhabbar, lager- und förderbar (Verblocken der sehr weichen TPE-Teilchen). Bei hohem PVC-Anteil sind die elastischen Eigenschaften ungenügend. Damit hergestellte Formkörper weisen nur unzureichende Dehnung auf. Vor allem aber führen diese Produkte aufgrund des Itaconsäureanteils zu intensiver roter bzw. rotbrauner Verfärbung damit hergestellter Formkörper.

TABELLE 1:

| TPE-Zus.setzung | Bsp.1 | Bsp.2 | Bsp.3 | Vbsp.1 | Vbsp.2 | Vbsp.3 | Vbsp.4 |
|---|---|---|---|---|---|---|---|
| Pfropfgrundlage | | | | | | | |
| Anteil (Gew%) | 52 | 55 | 52 | 52 | 42 | 54 | 66 |
| Zusammensetzung (Gew%) | | | | | | | |
| n-Butylacrylat | 99.8 | 35 | 99.8 | 99.8 | 99.8 | 97.0 | 97.0 |
| Ethylen | | 28.8 | | | | | |
| Vinylacetat | | 36 | | | | | |
| Allylmethacrylat | 0.2 | 0.2 | 0.2 | 0.2 | 0.2 | | |
| TMPTA | | | | | | 2.0 | 2.0 |
| Itaconsäure | | | | | | 1.0 | 1.0 |
| Pfropfphase | | | | | | | |
| Anteil (Gew%) | 48 | 45 | 48 | 48 | 58 | 46 | 34 |
| Zusammensetzung (Gew%) | | | | | | | |
| Vinylchlorid | 99.7 | 99.7 | 100.0 | 100.0 | 100.0 | 100.0 | 100.0 |
| Diallylphthalat | 0.3 | 0.3 | | | | | |

EP 0 647 663 B1

TABELLE 2:

| TPE-Eigenschaften | Bsp.1 | Bsp.2 | Bsp.3 | Vbsp.1 | Vbsp.2 | Vbsp.3 | Vbsp.4 |
|---|---|---|---|---|---|---|---|
| **Pulver:** | | | | | | | |
| Rieselfähigkeit | + | + | + | o | + | o | – |
| Lagertest | + | + | + | – | + | – | – |
| Verarbeitbarkeit | + | + | + | + | + | – | – |
| **Formkörper:** | | | | | | | |
| Farbe | farbl. | farbl. | farbl. | farbl. | farbl. | rotbr. | rot |
| Oberfläche | + | + | + | + | + | – | o |
| Shore A | 81 | 80 | 78 | 68 | 87 | 86 | 64 |
| Reißfestigkeit (N/mm$^2$) | 13.7 | 17.9 | 10.8 | 11.6 | 17.1 | 11.4 | 9.7 |
| Dehnung (%) | 254 | 243 | 266 | 273 | 247 | 130 | 141 |
| Compression-Set | | | | | | | |
| 23°C (%) | 26 | 23 | 27 | 32 | 44 | 31 | 25 |
| 100°C (%) | 33 | 33 | 35 | 41 | 47 | 59 | 27 |
| Spontanes Rückstellvermögen | ++ | + | ++ | o | – | + | ++ |

**Patentansprüche**

1. Thermoplastische Elastomere auf der Basis von Vinylchlorid-Pfropfcopolymerisaten enthaltend

   A) 35 bis 60 Gew%, bezogen auf das Gesamtgewicht des Vinylchlorid-Pfropfcopolymerisats, einer aufgepropften, vernetzten Copolymerphase herstellbar durch Copolymerisation von

   80 bis 99.95 Gew% Vinylchlorid,

   0.05 bis 3.0 Gew% mehrfach ethylenisch ungesättigten Comonomeren sowie

   0 bis 19.95 Gew% weiteren copolymerisierbaren, ethylenisch ungesättigten Comonomeren,

   oder

   mehr als 35 bis 60 Gew%, bezogen auf das Gesamtgewicht des Vinylchlorid-Pfropfcopolymerisats, einer aufgepropften (Co)polymerphase, herstellbar durch (Co)polymerisation von

   80 bis 100 Gew% Vinylchlorid sowie

   0 bis 20 Gew% weiteren copolymerisierbaren, ethylenisch ungesättigten Comonomeren, bei einer Polymerisationstemperatur von 0 bis 45°C,

11

und

B) 40 bis 65 Gew%, bezogen auf das Gesamtgewicht des Vinylchlorid-Propfcopolymerisats, einer vernetzten Pfropfgrundlage enthaltend

ein vernetztes Acrylsäureester-Copolymerisat mit 0.01 bis 5 Gew% mehrfach ethylenisch ungesättigten Comonomer-Einheiten sowie gegebenenfalls weiteren mit Acrylsäureestern copolymerisierbaren Comonomeren.

2. Thermoplastische Elastomere auf der Basis von Vinylchlorid-Pfropfcopolymerisaten enthaltend

A) 40 bis 55 Gew%, bezogen auf das Gesamtgewicht des Pfropfcopolymerisats, einer aufgepfropften, vernetzten Copolymerphase aus

98.5 bis 99.9 Gew% Vinylchlorid sowie

0.1 bis 1.5 Gew% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,

oder

mehr als 40 bis 55 Gew%, bezogen auf das Gesamtgewicht des Vinylchlorid-Pfropfcopolymerisats, einer aufgepropften VC-Polymerphase, herstellbar durch Pfropfpolymerisation von Vinylchlorid bei einer Polymerisationstemperatur von 0 bis 45°C,

und

B) 45 bis 60 Gew%, bezogen auf das Gesamtgewicht des Pfropfcopolymerisats, einer vernetzten Pfropfgrundlage bestehend aus einem vernetzten Copolymerisat von n-Butylacrylat und/oder 2-Ethylhexylacrylat, oder aus einem vernetzten Acrylsäureester-Ethylen-Vinylacetat-Copolymerisat mit einem Acrylat-Gehalt von 35 bis 70 Gew% oder Gemischen der genannten Copolymerisate, wobei die Copolymerisate mit 0.05 bis 0.5 Gew% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind.

3. Verfahren zur Herstellung der thermoplastischen Elastomeren nach Anspruch 1 oder 2, bei dem in einer 1. Stufe durch radikalische Polymerisation nach dem Emulsionspolymerisationsverfahren in wäßrigem Medium

a) ein oder mehrere Acrylsäureester von Alkoholen mit 1 bis 12 C-Atomen oder

b) ein oder mehrere Acrylsäureester von Alkoholen mit 1 bis 12 C-Atomen und ein oder mehrere Vinylester von Carbonsäuren mit 2 bis 12 C-Atomen unter Aufdrücken von Ethylen

copolymerisiert werden,

wobei die Copolymerisation in Gegenwart von 0.05 bis 5 Gew%, bezogen auf die gesamte Monomerphase, mehrfach ethylenisch ungesättigten Comonomeren, gegebenenfalls in Gegenwart von weiteren copolymerisierbaren ethylenisch ungesättigten Comonomeren, durchgeführt wird,

und in einer 2.Stufe ein Monomergemisch enthaltend 80 bis 99.95 Gew% Vinylchlorid, 0.05 bis 3.0 Gew% mehrfach ethylenisch ungesättigte Comonomere und 0 bis 19.95 Gew% weitere copolymerisierbare, ethylenisch ungesättigte Comonomere,

oder in dieser 2. Stufe, bei einer Polymerisationstemperatur von 0 bis 45°C, 80 bis 100 Gew% Vinylchlorid und 0 bis 20 Gew% weitere copolymerisierbare, ethylenisch ungesättigte Comonomere,

in Gegenwart der nach der ersten Verfahrensstufe erhaltenen Emulsionen oder Gemische dieser Emulsionen durch radikalische Polymerisation nach dem Suspensions- oder Emulsionspolymerisationsverfahren in wäßrigem Medium copolymerisiert werden,

und nach Aufarbeitung zum trockenen Pfropfcopolymerisat dieses gegebenenfalls mit den für Thermoplastische Elastomere üblichen Additiven compoundiert wird.

4. Verwendung der Thermoplastischen Elastomere nach Anspruch 1 oder 2 zur Herstellung von elastischen Formkörpern mittels Extrusion, Kalandrierung oder Spritzguß.

5. Verwendung der Thermoplastischen Elastomere nach Anspruch 1 oder 2 als Schlagzähmodifier.

**Claims**

1. Thermoplastic elastomers based on vinyl chloride graft copolymers comprising

A) 35 to 60% by weight, based on the total weight of the vinyl chloride graft copolymer, of a grafted-on, crosslinked copolymer phase which can be prepared by copolymerization of

80 to 99.95% by weight of vinyl chloride,

0.05 to 3.0% by weight of polyethylenically unsaturated comonomers and

0 to 19.95% by weight of other copolymerizable, ethylenically unsaturated comonomers,

or

more than 35 to 60% by weight, based on the total weight of the vinyl chloride graft copolymer, of a grafted-on (co)polymer phase which can be prepared by (co)polymerization of

80 to 100% by weight of vinyl chloride and

0 to 20% by weight of other copolymerizable, ethylenically unsaturated comonomers at a polymerization temperature of 0 to 45 °C,

and

B) 40 to 65% by weight, based on the total weight of the vinyl chloride graft copolymer, of a crosslinked graft base comprising

a crosslinked acrylic acid ester copolymer having 0.01 to 5% by weight of polyethylenically unsaturated comonomer units and, if appropriate, other comonomers which can be copolymerized with acrylic acid esters.

2. Thermoplastic elastomers based on vinyl chloride graft copolymers comprising

A) 40 to 55% by weight, based on the total weight of the graft copolymer, of a grafted-on, crosslinked copolymer phase of

98.5 to 99.9% by weight of vinyl chloride and

0.1 to 1.5% by weight of one or more polyethylenically unsaturated comonomers from the group consisting of diallyl phthalate, allyl methacrylate, ethylene glycol dimethacrylate, butylene glycol diacrylate, trimethylene glycol diacrylate and trimethyolpropane [sic] triacrylate,

or

more than 40 to 55% by weight, based on the total weight of the vinyl chloride graft copolymer, of a grafted-on VC polymer phase which can be prepared by grafting polymerization of vinyl chloride at a polymerization temperature of 0 to 45 °C,

and

B) 45 to 60% by weight, based on the total weight of the graft copolymer, of a crosslinked graft base comprising a crosslinked copolymer of n-butyl acrylate and/or 2-ethylhexyl acrylate, or a crosslinked acrylic acid ester/ethylene/vinyl acetate copolymer having an acrylate content of 35 to 70% by weight, or mixtures of the copolymers mentioned, the copolymers being crosslinked with 0.05 to 0.5% by weight of one or more copolymerized, polyethylenically unsaturated comonomers from the group consisting of diallyl phthalate, allyl methacrylate, ethylene glycol dimethacrylate, butylene glycol diacrylate, trimethylene glycol diacrylate and trimethyolpropane [sic] triacrylate.

3. Process for the preparation of the thermoplastic elastomers according to Claim 1 or 2, in which, in a 1st stage,

a) one or more acrylic acid esters of alcohols having 1 to 12 C atoms or

b) one or more acrylic acid esters of alcohols having 1 to 12 C atoms and one or more vinyl esters of carboxylic acids having 2 to 12 C atoms

are copolymerized, while forcing in ethylene, by free radical polymerization by the emulsion polymerization process in an aqueous medium,

the copolymerization being carried out in the presence of 0.05 to 5% by weight, based on the total monomer phase, of polyethylenically unsaturated comonomers, if appropriate in the presence of other copolymerizable, ethylenically unsaturated comonomers,

and, in a 2nd stage, a monomer mixture comprising 80 to 99.95% by weight of vinyl chloride, 0.05 to 3.0% by weight of polyethylenically unsaturated comonomers and 0 to 19.95% by weight of other copolymerizable, ethylenically unsaturated comonomers,

or, in this 2nd stage, at a polymerization temperature of 0 to 45 °C, 80 to 100% by weight of vinylchloride and 0 to 20% by weight of other copolymerizable, ethylenically unsaturated comonomers,

are copolymerized in the presence of the emulsions obtained after the first process stage, or mixtures of these emulsions, by free radical polymerization by the suspension or emulsion polymerization process in an aqueous medium,

and, after working up to give the dry graft copolymer, this is compounded, if appropriate, with the additives customary for thermoplastic elastomers.

**4.** Use of the thermoplastic elastomers according to Claim 1 or 2 for the production of elastic shaped articles by means of extrusion, calendering or injection moulding.

**5.** Use of the thermoplastic elastomers according to Claim 1 or 2 as impact modifiers.

**Revendications**

**1.** Elastomères thermoplastiques à base de copolymérisats greffés de chlorure de vinyle, contenant

A) de 35 à 60 % en poids, par rapport au poids total du copolymérisat greffé de chlorure de vinyle, d'une phase de copolymère greffée, réticulée, que l'on peut préparer par copolymérisation

de 80 à 99,95 % en poids de chlorure de vinyle,

de 0,05 à 3,0 % en poids de comonomères plusieurs fois éthyléniquement insaturés ainsi que

de 0 à 19,95 % en poids de comonomères supplémentaires copolymérisables, éthyléniquement insaturés

ou

de plus de 35 à 60 % en poids, par rapport au poids total du copolymérisat greffé de chlorure de vinyle, d'une phase de (co)polymère greffée, que l'on peut préparer par (co)polymérisation

de 80 à 100 % en poids de chlorure de vinyle ainsi que

de 0 à 20 % en poids de comonomères supplémentaires copolymérisables, éthyléniquement insaturés, lors d'une température de polymérisation de 0 à 45°C,

et

B) de 40 à 65 % en poids, par rapport au poids total du copolymérisat greffé de chlorure de vinyle, d'une base greffée réticulée contenant

un copolymérisat d'ester d'acide acrylique réticulé ayant de 0,01 à 5 % en poids d'unités comonomères plusieurs fois éthyléniquement insaturées ainsi que, le cas échéant, de comonomères supplémentaires copolymérisables avec des esters d'acide acrylique.

**2.** Elastomères thermoplastiques à base de copolymérisats greffés de chlorure de vinyle contenant

A) de 40 à 55 % en poids, par rapport au poids total du copolymérisat greffé, d'une phase de copolymère greffée réticulée

de 98,5 à 99,9 % en poids de chlorure de vinyle ainsi que

de 0,1 à 1,5 % en poids d'un ou de plusieurs comonomères plusieurs fois éthyléniquement insaturés provenant du groupe du phtalate de diallyle, du méthacrylate d'allyle, du diméthacrylate d'éthylèneglycol, du diacrylate de butylèneglycol, du diacrylate de triméthylèneglycol, du triacrylate de triméthyolpropane [sic]

ou

de plus de 40 à 55 % en poids, par rapport au poids total du copolymérisat greffé de chlorure de vinyle, d'une phase de polymère greffée de chlorure de vinyle, que l'on peut préparer par polymérisation par greffage de chlorure de vinyle à une température de polymérisation de 0 à 45°C,

et

B) de 45 à 60 % en poids, par rapport au poids total du copolymérisat greffé, d'une base greffée réticulée, se composant d'un copolymérisat réticulé d'acrylate de n-butyle et/ou d'acrylate de 2-éthylhexyle, ou d'un copolymérisat réticulé d'ester d'acide acrylique/éthylène/acétate de vinyle, ayant une teneur en acrylate de 35 à 70 % en poids ou des mélanges des copolymérisats cités, les copolymérisats étant réticulés avec de 0,05 à 0,5 % en poids d'un ou de plusieurs comonomères copolymérisables plusieurs fois éthyléniquement insaturés provenant du groupe du phtalate de diallyle, du méthacrylate d'allyle, du diméthacrylate d'éthylèneglycol, du diacrylate de butylèneglycol, du diacrylate de triméthylèneglycol, du triacrylate de triméthyolpropane [sic].

**3.** Procédé de préparation d'élastomères thermoplastiques selon la revendication 1 ou 2, lors duquel, dans une 1ère étape par polymérisation radicalaire conformément au procédé de polymérisation en émulsion, on procède à la copolymérisation

a) d'un ou de plusieurs esters de l'acide acrylique d'alcools ayant de 1 à 12 atomes de C ou

b) d'un ou de plusieurs esters de l'acide acrylique d'alcools ayant de 1 à 12 atomes de C et d'un ou de plusieurs esters vinyliques d'acides carboxyliques ayant de 2 à 12 atomes de C, avec forçage d'éthylène,

la copolymérisation étant effectuée en présence de 0,05 à 5 % en poids, par rapport à la phase

14

monomère totale, de comonomères plusieurs fois éthyléniquement insaturés, le cas échéant, en présence de comonomères supplémentaires copolymérisables éthyléniquement insaturés,

et, dans une 2ème étape, on procède à la copolymérisation d'un mélange de monomères contenant de 80 à 99,95 % en poids de chlorure de vinyle, de 0,05 à 3,0 % en poids de comonomères plusieurs fois éthyléniquement insaturés et de 0 à 19,95 % en poids de comonomères supplémentaires copolymérisables éthyléniquement insaturés,

ou, dans cette 2ème étape, à une température de polymérisation de 0 à 45 °C, de 80 à 100 % en poids de chlorure de vinyle et de 0 à 20 % en poids de comonomères supplémentaires copolymérisables éthyléniquement insaturés,

en présence des émulsions ou des mélanges de ces émulsions obtenues après la première étape de procédé par une polymérisation radicalaire conformément au procédé de polymérisation en émulsion ou en suspension en milieu aqueux,

et, après traitement pour obtenir le copolymérisat greffé sec, ceci est mélangé, le cas échéant, avec les additifs usuels pour les élastomères thermoplastiques.

4. Utilisation des élastomères thermoplastiques selon la revendication 1 ou 2 pour la préparation de corps de forme élastiques par extrusion, par laminage ou par moulage par injection.

5. Utilisation des élastomères thermoplastiques selon la revendication 1 ou 2 en tant qu'agents modificateurs de la résilience.